# EUROPEAN PATENT SPECIFICATION

(11) **EP 2 836 043 B1**
(45) Date of publication and mention of the grant of the patent: **26.08.2020**
(21) Application number: 13819845.2
(22) Date of filing: 18.06.2013
(51) Int. Cl.: H04L 5/00, H04W 72/04

(54) **METHOD AND DEVICE FOR ALLOCATING CHANNEL RESOURCES OF WLAN AND WIRELESS LOCAL AREA NETWORK COMMUNICATION SYSTEM**
VERFAHREN UND VORRICHTUNG FÜR DIE ZUWEISUNG VON WLAN-KANALRESSOURCEN UND WLAN-KOMMUNIKATIONSSYSTEM
PROCÉDÉ ET DISPOSITIF D'ATTRIBUTION DE RESSOURCES DE CANAL DE WLAN ET SYSTÈME DE COMMUNICATION DE RÉSEAU LOCAL SANS FIL

(30) Priority: 19.07.2012 CN 201210250635; 05.09.2012 CN 201210325486
(43) Date of publication of application: 11.02.2015
(73) Proprietor: Huawei Technologies Co., Ltd., Longgang District Shenzhen, Guangdong 518129 (CN)
(72) Inventor: WANG, Li, Shenzhen Guangdong 518129 (CN); JIANG, Yanping, Shenzhen Guangdong 518129 (CN); ZHEN, Bin, Shenzhen Guangdong 518129 (CN)
(74) Representative: Goddar, Heinz J.
(86) International application number: PCT/CN2013/077368
(87) International publication number: WO 2014/012406

(56) References cited:
- EP-A1- 1 750 405
- CN-A- 101 056 156
- CN-A- 102 281 087
- US-A1- 2007 248 046
- US-A1- 2009 110 087
- US-A1- 2010 255 851
- US-A1- 2012 149 410
- US-B1- 7 672 381
- YOSHIKI T ET AL: "HIGH BIT RATE TRANSMISSION SCHEME WITH A MULTILEVEL TRANSMIT POWER CONTROL FOR THE OFDM BASED ADAPTIVE MODULATION SYSTEMS", CONNECTING THE MOBILE WORLD : PROCEEDINGS / IEEE VTS 53RD VEHICULAR TECHNOLOGY CONFERENCE, SPRING, 2001; [IEEE VEHICULAR TECHNOLGY CONFERENCE], IEEE SERVICE CENTER, USA, vol. CONF. 53, 6 May 2001 (2001-05-06), pages 727-731, XP001067056, DOI: 10.1109/VETECS.2001.944939 ISBN: 978-0-7803-6728-9
- Webb Steele ET AL: "Adaptive Single-and Multi-user OFDM Techniques", OFDM and MC-CDMA for Broadband Multi-User Communications, WLANs and Broadcasting, 15 May 2012 (2012-05-15), pages 159-217, XP055181863, DOI: 10.1002/9780470861813 ISBN: 978-0-47-086181-3 Retrieved from the Internet: URL:http://onlinelibrary.wiley.com/store/1 0.1002/9780470861813.ch6/asset/ch6.pdf?v=1 &t=i89z77g9&s=9e6cf5fe23096c42ed31615d985a 958108d37dea [retrieved on 2015-04-09]
- HWANJOON KWON ET AL: "Uniform Bit and Power Allocation with Subcarrier Selection for Coded OFDM Systems", VEHICULAR TECHNOLOGY CONFERENCE (VTC SPRING), 2011 IEEE 73RD, IEEE, 15 May 2011 (2011-05-15), pages 1-5, XP031897109, DOI: 10.1109/VETECS.2011.5956710 ISBN: 978-1-4244-8332-7

## Description

### TECHNICAL FIELD

The present invention relates to communication technologies, and in particular, to a method and device for allocating WLAN channel resources and a wireless local area network communication system.

### BACKGROUND

A wireless local area network (wireless local area network, abbreviated as WLAN) technology has already been extensively applied in such occasions as homes, campuses, and enterprise offices. When a user arrives at an area covered by a WLAN, the user can select the WLAN network to implement data services. In a WLAN system based on an orthogonal frequency division multiplexing (Orthogonal Frequency Division Multiplexing, abbreviated as OFDM) technology, a channel resource allocation method is based on full bandwidth allocation, that is, a single station generally needs to occupy the whole bandwidth during communications.

With the development of the WLAN technology, a higher requirement is imposed on the coverage of the WLAN, for example, it is required that the coverage of the WLAN should reach 1 kilometer. However, in an outdoor scenario when the coverage is expanded, an environment with a powerful channel frequency selectivity is faced unavoidably, that is, there is a huge difference in channel quality between all subchannels in the whole bandwidth. In such a scenario, if data is still transmitted in a subchannel with very poor channel quality, transmit power of a station is greatly wasted in fact. In addition, with restriction imposed by a pull-down effect of the subchannel with very poor channel quality, it is very difficult to obtain higher order modulation.
Yoshiki T. et al: "high bit rate transmission scheme with a multilevel transmit power control for the OFDM based adaptive modulation systems", connecting the mobile world: proceedings / IEEE vts 53rd vehicular technology conference, spring, 2001; IEEE service center, USA, vol. Conf. 53,6 May 2001, pages 727-731, discloses a multilevel transmit power control (MTCP) for OFDM based adaptive modulation systems and to achieve high bit rate transmission services without increasing the transmit power. A modulation level for each subcarrier is controlled according to channel conditions MTPC assigns both modulation level and transmit power for each subcarrier to maximize the total transmission rate for all subcarriers. The modulation parameter used by the i-th subcarrier is defined as k(i), where k(i) = 0 means that the subcarrier is allocated no transmit power.

US 2009/110087 A1 discloses scheduling subcarriers in an OFDM communication system. In an exemplary method, channel quality metric values for each of a plurality of sub-channels are determined, in view of a selected mobile terminal. For each of two or more threshold levels for the channel quality metric, sub-carrier groups composed of sub-carriers corresponding to sub-channels having channel quality metric values superior to the threshold level are identified, and an estimated data throughput is calculated for each of the identified sub-carrier groups.

US 2010/0255851 A1 discloses of mapping a physical resource to a logical resource in a wireless communication system. The method includes: dividing a physical frequency band into at least one frequency partition, wherein each frequency partition is divided into a localized region and a distributed region in a frequency domain; and mapping the at least one frequency partition into at least one logical resource unit, wherein the localized region is directly mapped into the logical resource unit and the distributed region is mapped into the logical resource unit after rearranging subcarriers within the distributed region.

HWANJOON KWON et al: "Uniform Bit and Power Allocation with Subcarrier Selection for Coded OFDM Systems", VEHICULAR TECHNOLOGY CONFERENCE (VTC SPRING), 2011 IEEE 15 May 2011, pp. 1-5 deals with problems of adaptive bit power allocation for coded OFDM systems. A simple adaptive allocation technique is disclosed, where data are transmitted only using the strongest subcarrier with uniform power and uniform consolation size.
US 2007/0248046 A1 discloses a base station for use in an orthogonal frequency division multiplexing (OFDM) network allocating a plurality of consecutive subbands or a plurality of non-consecutive subbands to a first subscriber station according to a channel quality value or a mobility value associated with the first subscriber station, or an operating mode of the base station. The base station allocates non-consecutive subbands using a bitmap indicator and allocates consecutive subbands using a start-end indicator.

### SUMMARY

The present invention provides methods according to claims 1 and 2, and devices according to claims 3 and 4, for allocating WLAN channel resources and a wireless local area network communication system, so as to reduce waste of transmit power of a station and increase a modulation order. The present invention is defined by the subject matter of the independent claims. In the following, embodiments or implementations which are not covered by the claims shall be considered as example useful for understanding the invention.

In a first aspect, an embodiment of the present invention provides a method for allocating WLAN channel resources, including:
obtaining subcarrier allocation information, where the subcarrier allocation information is used to identify a subcarrier or a subcarrier group used to bear data, where channel quality of a subchannel where the subcarrier or the subcarrier group is located is greater than or equal to a judgment threshold; and
sending data to a receiving device on the subcarrier or the subcarrier group according to the subcarrier allocation information wherein the subcarrier allocation information comprises: an identifier of a first subcarrier or a first subcarrier group of multiple successively allocated subcarriers or subcarrier groups and the quantity of the multiple subcarriers or the multiple subcarrier groups, wherein the obtaining (102) subcarrier allocation information comprises: receiving a channel state information, CSI, feedback message sent by the receiving device, wherein the CSI feedback message carries the subcarrier allocation information.

In still another possible implementation manner, the subcarrier allocation information being used to identify a subcarrier or a subcarrier group used to bear data includes: the subcarrier allocation information being used to identify the subcarrier group used to bear data, where the channel quality of the subchannel where the subcarrier group is located is greater than or equal to the judgment threshold; and accordingly, the sending data on the subcarrier to a receiving device includes: sending the data on the subcarrier group to the receiving device.

In another aspect, the present invention provides a method for allocating WLAN channel resources, including:
obtaining subcarrier allocation information, where the subcarrier allocation information is used to identify a subcarrier or a subcarrier group used to bear data, where channel quality of a subchannel where the subcarrier or the subcarrier group is located is greater than or equal to a judgment threshold; and
receiving data on the subcarrier or the subcarrier group according to the subcarrier allocation information wherein the subcarrier allocation information comprises: an identifier of a first subcarrier or a first subcarrier group of multiple successively allocated subcarriers or subcarrier groups and the quantity of the multiple subcarriers or the multiple subcarrier groups, wherein the obtaining subcarrier allocation information includes: performing channel estimation according to a measurement signal received from the transmitting device to obtain a CSI; and determining the subcarrier allocation information according to the CSI and the judgment threshold; and accordingly, after the determining subcarrier allocation information and before the receiving data on the subcarrier according to the subcarrier allocation information, the method further includes sending a CSI feedback message to the transmitting device, where the CSI feedback message carries the subcarrier allocation information, so that the transmitting device sends the data on the subcarrier according to the subcarrier allocation information.

In a possible implementation manner, the subcarrier allocation information includes at least one bit, where each bit corresponds to one subcarrier or one subcarrier group and the bit is used to indicate whether a corresponding subcarrier or subcarrier group is selected; or the subcarrier allocation information includes: an identifier of a first subcarrier or a first subcarrier group of multiple successively allocated subcarriers or subcarrier groups and the quantity of the multiple subcarriers or the multiple subcarrier groups.

In still another possible implementation manner, the obtaining subcarrier allocation information includes: receiving a signal field sent by the transmitting device, where the signal field is set with the subcarrier allocation information.

In still another aspect, the present invention provides a transmitting device of a WLAN, including:
an allocation information obtaining unit, configured to obtain subcarrier allocation information, where the subcarrier allocation information is used to identify a subcarrier or a subcarrier group used to bear data, where channel quality of a subchannel where the subcarrier or the subcarrier group is located is greater than or equal to a judgment threshold; and
a carrier data sending unit, configured to send data to a receiving device on the subcarrier or the subcarrier group according to the subcarrier allocation information wherein the subcarrier allocation information comprises: an identifier of a first subcarrier or a first subcarrier group of multiple successively allocated subcarriers or subcarrier groups and the quantity of the multiple subcarriers or the multiple subcarrier groups, wherein the allocation information obtaining unit is specifically configured to determine the subcarrier allocation information according to channel state information CSI sent by the receiving device and a preset judgment threshold; and the allocation information obtaining unit is specifically configured to receive a CSI feedback message sent by the receiving device, where the CSI feedback message carries the CSI and the subcarrier allocation information.

In still another aspect, the present invention provides a receiving device of a WLAN, including:
an allocation information obtaining unit, configured to obtain subcarrier allocation information, where the subcarrier allocation information is used to identify a subcarrier or a subcarrier group used to bear data, where channel quality of a subchannel where the subcarrier or the subcarrier group is located is greater than or equal to a judgment threshold; and a carrier data receiving unit, configured to receive data on the subcarrier or the subcarrier group according to the subcarrier allocation information, wherein the subcarrier allocation information comprises: an identifier of a first subcarrier or a first subcarrier group of multiple successively allocated subcarriers or subcarrier groups and the quantity of the multiple subcarriers or the multiple subcarrier groups, wherein the allocation information obtaining unit is specifically configured to perform channel estimation according to a measurement signal received from a transmitting device to obtain a CSI; and determine the subcarrier allocation information according to the CSI and a preset judgment threshold; and the receiving device further includes: a channel information feedback unit, configured to: after the subcarrier allocation information is determined and before data is received on the subcarrier according to the subcarrier allocation information, send a CSI feedback message to the transmitting device, where the CSI feedback message carries the subcarrier allocation information, so that the transmitting device sends the data on the subcarrier according to the subcarrier allocation information.

In still another possible implementation manner, the allocation information obtaining unit is specifically configured to receive a signal field sent by the transmitting device, where the signal field is set with the subcarrier allocation information.

In still another aspect, an embodiment of the present invention provides a wireless local area network communication system, including the transmitting device described in the present invention and the receiving device described in the present invention.

The method and device for allocating WLAN channel resources and a wireless local area network communication system that are provided by the present invention bring about the following technical effect: By sending data on a subcarrier whose channel quality is greater than or equal to a judgment threshold, a waste of transmit power of a station is reduced, and a modulation order can be increased because no restriction is imposed by pull-down of a subchannel with very poor channel quality.

### BRIEF DESCRIPTION OF DRAWINGS

FIG. 1 is a schematic flowchart of a method for allocating WLAN channel resources according to an embodiment of the present invention;
FIG. 2 is a schematic flowchart of a method for allocating WLAN channel resources according to another embodiment of the present invention;
FIG. 3 is a schematic signaling diagram of a method for allocating WLAN channel resources according to still another embodiment of the present invention;
FIG. 4 is a schematic diagram illustrating a single user frame format in a method for allocating WLAN channel resources according to still another embodiment of the present invention;
FIG. 5 is a schematic diagram illustrating a multiuser frame format in a method for allocating WLAN channel resources according to still another embodiment of the present invention;
FIG. 6 is a schematic signaling diagram of a method for allocating WLAN channel resources according to still another embodiment of the present invention;
FIG. 7 is a schematic signaling diagram of a method for allocating WLAN channel resources according to still another embodiment of the present invention;
FIG. 8 is a schematic diagram illustrating a format of a MAC management frame in a method for allocating WLAN channel resources according to still another embodiment of the present invention;
FIG. 9 is a schematic diagram illustrating a format of an HT control field in FIG. 8;
FIG. 10 is schematic structural diagram of a communication device according to an embodiment of the present invention;
FIG. 11 is a schematic structural diagram of a transmitting device according to an embodiment of the present invention;
FIG. 12 is a schematic structural diagram of a receiving device according to an embodiment of the present invention; and
FIG. 13 is a schematic signaling diagram of a method for allocating WLAN channel resources according to still another embodiment of the present invention.

### DESCRIPTION OF EMBODIMENTS

Embodiments of the present invention provide an OFDM-based method for allocating WLAN channel resources. This method allocates only a part of bandwidths, that is, transmits data on a sub carrier in a channel with channel quality greater than or equal to a judgment threshold, thereby reducing a waste of transmit power of a station.

In the following embodiments, a transmitting device and a receiving device are involved. In a WLAN system, the transmitting device and the receiving device are, for example, a station (station, abbreviated as STA), an access point (access point, abbreviated as AP), and the like. The transmitting device and the receiving device described in the following may be two stations, or be one station and one access point, or be two access points. The form of the devices is not limited in the embodiments of the present invention, as long as they are two devices communicating with each other in a WLAN system. For brevity, in the method embodiments, the transmitting device is briefly referred to as a transmitting end, the receiving device is briefly referred to as a receiving end, and the transmitting end sends data to the receiving end.

### Embodiment 1

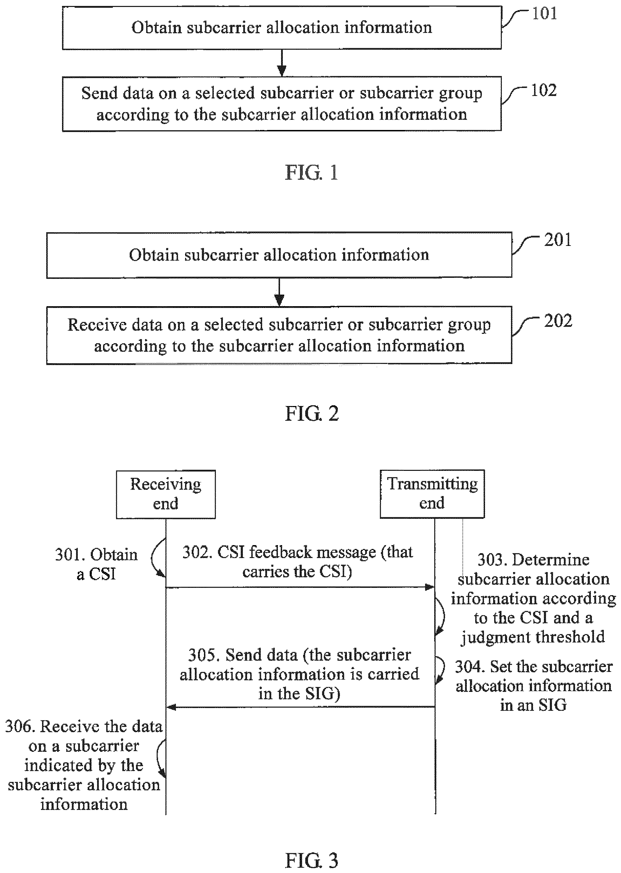

FIG. 1 is a schematic flowchart of a method for allocating WLAN channel resources according to an embodiment of the present invention, where the method may be executed by a transmitting end. As shown in FIG. 1, the method may include the following steps:
101. Obtain subcarrier allocation information.

The subcarrier allocation information is used to identify a selected subcarrier used to bear data, and channel quality of a subchannel where the subcarrier is located is greater than or equal to a judgment threshold.

In an OFDM-based WLAN system, one channel includes multiple subchannels, and each subchannel includes one subcarrier used to bear data. In this embodiment, only subcarriers in a subchannel with channel quality greater than or equal to a judgment threshold are selected to transmit data, while subcarriers in remaining subchannels with channel quality smaller than the judgment threshold are not used and in an idle state. In this way, a waste of power in the prior art that is caused by transmitting data on subcarriers with poor channel quality can be avoided, and a modulation order can be increased, and a transmission rate can be increased because no restriction is imposed by pull-down of a subchannel with very poor channel quality.

The foregoing channel quality may be represented, for example, by using channel state information CSI, and a specific value of the judgment threshold may be obtained through emulation or test under a specific configuration and in a specific scenario, for example, a channel environment may be simulated to determine which channel quality brings about a better data transmission effect, and further to determine the judgment threshold of the channel quality. For example, assuming that the value of a preset judgment threshold is 60 and a CSI of a subchannel is 50, channel quality of the subchannel is smaller than the judgment threshold, indicating that the channel quality is poor, and subcarriers in the subchannel are no longer used to bear data.

In this embodiment, the subcarrier allocation information is used to identify a selected subcarrier used to bear data, where the subcarrier also means a subcarrier group, that is, includes a selected single subcarrier (a subcarrier in a single subchannel) and a selected subcarrier group (in this case, a subcarrier group formed by multiple subcarriers is collectively called a subcarrier, where subcarriers in the subcarrier group may be physically successive or be mapped according to a principle and be not physically successive, and multiple subchannels where the subcarrier group is located are collectively called a subchannel.)

It should be noted that, in this embodiment, when whether subcarriers in the channel are allocated and used is judged according to the channel quality, if a single subcarrier is judged, the judgment is based on channel quality of a single subchannel, for example, assuming that there are five subchannels in the channel, CSIs (totally five CSIs) of the subchannels need to be determined respectively, and whether a corresponding subcarrier is used is judged according to the CSIs of the subchannels. If a subcarrier group is judged, the judgment is based on overall channel quality of multiple subchannels corresponding to the subcarrier group. For example, assuming that there are five subchannels in a channel, where subcarriers in first three subchannels form a first subcarrier group and subcarriers in last two subchannels form a second subcarrier group, whether the first subcarrier group is used is judged according to overall channel quality of the first three subchannels, and whether the second subcarrier group is used is judged according to overall channel quality of the last two subchannels, where the overall channel quality may be, for example, an average value of CSIs of all subchannels or be a combined equivalent CSI of the subchannel group which is obtained directly by measuring these subchannels as a whole.

The representation method of the subcarrier allocation information, for example, may use a bitmap, where each bit in the bitmap is used to indicate whether a subcarrier corresponding to the bit is selected for use; or the representation method of the subcarrier allocation information may use a successive allocation method, that is, use a combination of a starting subcarrier of multiple successively allocated subcarriers and the quantity of the multiple subcarriers.

102. Send data on a selected subcarrier or subcarrier group according to the subcarrier allocation information.

In this embodiment, data may be transmitted on a subcarrier identified by the subcarrier allocation information, while remaining subcarriers in the channel are not used and may be reserved because their channel quality is smaller than the judgment threshold. Compared with the prior art, a full bandwidth allocation is based in the prior art, which means all subcarriers in a channel are used, while this embodiment actually uses a partial bandwidth allocation method, in which only a part of subcarriers are used, and subcarriers with channel quality smaller than the judgment threshold are no longer used to avoid a waste of power.

By using the method for allocating WLAN channel resources in this embodiment, a transmitting end sends data on a selected subcarrier according to subcarrier allocation information, which reduces a waste of transmit power and increases a modulation order.

### Embodiment 2

FIG. 2 is a schematic flowchart of a method for allocating WLAN channel resources according to another embodiment of the present invention, where the method may be executed by a receiving end. As shown in FIG. 2, the method may include the following steps:
201. Obtain subcarrier allocation information.

The subcarrier allocation information is used to identify a selected subcarrier used to bear data, and channel quality of a subchannel where a subcarrier is located is greater than or equal to a judgment threshold, while remaining subcarriers in the channel are idle.

202. Receive data on a selected subcarrier or subcarrier group according to the subcarrier allocation information.

By using the method for allocating WLAN channel resources in this embodiment, a transmitting end sends data on a selected subcarrier according to subcarrier allocation information, which reduces a waste of transmit power and increases a modulation order; for a receiving end, a receiving and processing complexity of the receiving end is reduced.

In the following several embodiments, several implementation manners of the method for allocating channel resources in the embodiment of the present invention are listed according to methods of interactions between the transmitting end and the receiving end.

### Embodiment 3

FIG. 3 is a schematic signaling diagram of a method for allocating WLAN channel resources according to still another embodiment of the present invention. In this embodiment, a transmitting end determines a selected subcarrier according to a CSI fed back by a receiving end, and notifies the receiving end of the selected subcarrier. As shown in FIG. 3, the method may include the following steps:
301. A receiving end performs channel estimation to obtain a CSI.

The receiving end performs channel estimation according to a signal transmitted by a transmitting end to obtain the CSI. In this step, the channel may be measured by using a common method, for example, measuring a preamble signal, which is not further detailed.

302. The receiving end sends a CSI feedback message to a transmitting end, where the CSI feedback message carries the obtained CSI.

303. The transmitting end determines subcarrier allocation information according to the CSI and a preset judgment threshold.

The judgment threshold may be pre-configured at the transmitting end. The foregoing method of determining the subcarrier allocation information is illustrated as follows: Assuming that a channel between the transmitting end and the receiving end includes five subchannels, the quantity of CSIs fed back by the receiving end is also five, where the CSIs correspond to the subchannels respectively, for example, CSI₁ (subchannel 1), CSI₂ (subchannel 2), CSI₃ (subchannel 3), CSI₄ (subchannel 4), and CSI₅ (subchannel 5), and values of the foregoing five CSIs are 60, 50, 70, 76, and 81 respectively. If the preset judgment threshold is 70, it may be determined that channel quality of subchannel 1 and subchannel 2 is poor, and therefore, subcarriers in these two subchannels are not used; channel quality of subchannel 3 to subchannel 5 is greater than or equal to the judgment threshold, and therefore subcarriers in these three subchannels are used to bear data.

After the selected subcarrier is determined by using the foregoing judgment method, the transmitting end also needs to inform the receiving end of the selected subcarrier in subsequent 304 and 305, so that the receiving end can receive data on a corresponding subcarrier. Therefore, the foregoing selected subcarrier needs to be represented by using a certain method, where the information used to represent the selected subcarrier used to bear data is the subcarrier allocation information.

The following describes two optional representation methods of the subcarrier allocation information. It should be noted that, a representation method of the subcarrier allocation information is known by the receiving end and the transmitting end, that is, both the transmitting end and the receiving end know meanings of the representation method, for example, the meanings may be pre-defined through an agreement. Therefore, when the transmitting end sends the subcarrier allocation information represented by using the following methods to the receiving end, the receiving end can understand the meanings of these methods:

One method may use a bitmap (bitmap): The bitmap includes at least one bit. This embodiment uses multiple bits as an example, where each bit corresponds to one subcarrier, and the bit is used to indicate whether a corresponding subcarrier is selected. For example, assuming that the bitmap includes five bits (that is, 5 bits), where the five bits correspond to subcarriers in subchannel 1 to subchannel 5 in the foregoing example, when subcarriers in first two subchannels are not used and subcarriers in last three subchannels are used, the bitmap may be represented by "00111", where "1" indicates that the subcarrier is selected for use and "0" indicates that the subcarrier is not selected. Similarly, assuming that only subcarriers in subchannel 1 and subcarriers in subchannel 3 are selected, a corresponding bitmap is "10100".

According to the invention a successive allocation representation method. The subcarrier allocation information is jointly represented by using an identifier of a first subcarrier of multiple successively allocated subcarriers and the quantity of the multiple subcarriers. The following lists two optional successive allocation representation methods:

The foregoing example is still used for description. Assuming that among the five subcarriers in the channel, only last three subcarriers are used, the representation method may use the following method: assuming that the five subcarriers are numbered 0 to 4, the last three subcarriers are numbered 2, 3, and 4, which are represented as "010+010" in terms of binary bits; the first three bits 010 indicate the number of the first subcarrier of these three successively allocated subcarriers, that is, "2", and the last three bits plus 1 indicate the quantity of the successively allocated subcarriers, that is, 3. By combining this, it is obtained that "three subcarriers are allocated successively starting from a subcarrier numbered 2, that is, the third subcarrier", that is, subcarriers numbered 2, 3, and 4 are used. In this method, the quantity of occupied bits is calculated by using the following formula: "Vlog2 (the quantity of subcarriers (groups))® + Vlog2 (the quantity of subcarriers (groups))®".

Alternatively, the subcarrier allocation information is determined by using a mapping method: Firstly, a space occupied by the subcarrier allocation information and a total quantity of subcarriers in a channel are used as mapping of a first level. For example, according to the formula "the size of the space occupied by the subcarrier allocation information = the quantity of subcarriers (groups) × [the quantity of subcarriers (groups) + 1] ÷ 2", the total quantity of subcarriers in each channel corresponds to a specific bit value, for example, if a channel has 10 subcarriers, subcarrier allocation information of the channel occupies A bits; if a channel has five subcarriers, subcarrier allocation information of the channel occupies B bits, and the like. In this way, the total quantity of subcarriers in the channel can be obtained according to the size of the space occupied by the subcarrier allocation information. The specific quantity of occupied bits may be determined according to "∇log2 (5 × (5 + 1)/2)®", for example, in this embodiment, the channel having five subcarriers needs to occupy 4 bits (=∇log2 (5 × (5 + 1)/2)®), which means if the subcarrier allocation information occupies four bits, it indicates subcarrier allocation in a channel having five subcarriers. Next, because there are many options regarding the subcarrier allocation in the channel having five subcarriers, a specific subcarrier allocation method (the number of the first allocated subcarrier + the quantity of successively allocated subcarriers) and a binary bit representation are used as mapping of a second level. For example, "1+2" (which means the first allocated subcarrier is numbered 1 and two subcarriers are allocated successively) corresponds to binary bits "000" or "2+2" corresponds to "110", and the like. Specific binary bits corresponding to each subcarrier allocation method may be set independently so long as a specific subcarrier allocation method can be determined according to a mapping relationship. As foresaid, the size of the space occupied by the subcarrier allocation information is always four bits no matter which allocation method is used.

Further, in this embodiment, subcarriers may be classified into multiple subcarrier groups in a frequency domain, and whether a subcarrier group is selected is judged according to overall channel quality of multiple subchannels occupied by the subcarrier group. The judgment criterion is also whether overall channel quality of the subcarrier group is greater than or equal to the judgment threshold. The advantage of classifying subcarrier groups is that the size of the space occupied by the subcarrier allocation information can be reduced. For example, assuming that there are five subchannels, where subcarriers in first three subchannels are used and subcarriers in last two subchannels are not used, if a use condition of a single subcarrier is indicated, a use condition of the subcarriers is represented by "11100" and five bits are occupied; if the first three subcarriers are classified into a first subcarrier group and the last two subcarriers are classified into a second subcarrier group, only whether the two subcarrier groups are used needs to indicated, and the representation method is "10", which occupies two bits, thereby greatly saving the space occupied by the subcarrier allocation information.

The subcarrier classification may use a common method, for example, calculation may be performed according to a channel method1 to obtain a minimum coherence bandwidth, and subcarrier groups are classified according to the minimum coherence bandwidth, so that the overall bandwidth of a subcarrier group is not greater than the minimum coherence bandwidth, to ensure an overall channel flatness in the subcarrier group and a small difference in channel quality. For example, the size of a subcarrier of the 802.11 ah standard is 31.25 KHz, and minimum coherence bandwidths 1.33 MHz and 308 KHz are respectively obtained according to an indoor channel method1 TGn F (with a root mean square delay spread of 150 ns) an outdoor channel method1 SCM (with a root mean square delay spread of 650 ns), and 1/(5 × root mean square delay spread). In this case, 40 subcarriers or 10 subcarriers may be classified into one group. This is illustrated as an example only. During the specific implementation, the quantity of subcarriers in a subcarrier group may not be 40 or 10, so long as the overall bandwidth of the subcarrier group is not greater than the minimum coherence bandwidth.

In addition, with respect to the judgment of channel quality of a subcarrier group, for example, averaging may be performed on CSIs of subchannels to obtain overall channel quality of the subcarrier group, or channel quality of multiple subchannels occupied by the subcarrier group is measured as a whole; and then a judgment threshold is set for the overall channel quality of the subcarrier group. The judgment method is the same as the foregoing method, which is not further described.

304. The transmitting end sets the subcarrier allocation information in a signal field SIG.

After the transmitting end receives the CSI in 303, the transmitting end sends data to the receiving end, specifically, the data is borne by using the subcarrier indicated by the subcarrier allocation information determined in 303. For example, if last three subcarriers of five subcarriers are selected, the data is borne by using the last three subcarriers, and the remaining two subcarriers are not used.

In this embodiment, to ensure that the receiving end also knows which subcarrier the data is received from when receiving the data, the transmitting end sets the subcarrier allocation information in the signal field, and sends the signal field to the receiving end, where the signal field means as follows: When the transmitting end sends the data, the transmitting end usually carries some information used to inform the receiving end how to receive the data, and the information is set in the signal field (SIG), for example, inform the receiving end of a used encoding method, so that the receiving end knows how to decode the obtained data.

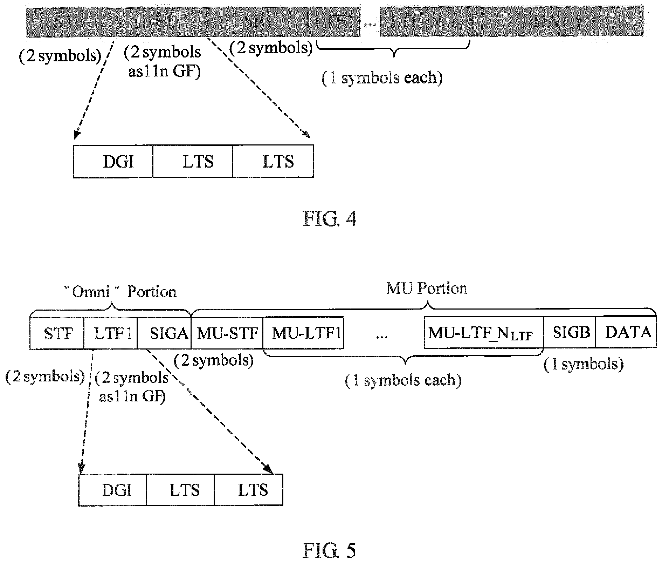

To describe a format of the signal field SIG clearly, refer to FIG. 4 and FIG. 5. FIG. 4 is a schematic diagram illustrating a single user frame format in a method for allocating WLAN channel resources according to still another embodiment of the present invention. FIG. 5 is a schematic diagram illustrating a multiuser frame format in a method for allocating WLAN channel resources according to still another embodiment of the present invention. The formats illustrated in FIG. 4 and FIG. 5 are frame formats in the 802.11ah standard. A position of the SIG can be seen from the figures; A frame of a single user (SU) has only one SIG, and a frame of a multiuser (MU) includes a SIGA and a SIGB, where the SIGA is designed for compatibility reasons to enable a user who supports the SU frame format but does not support the MU format to identify, through the SIGA, that the frame is a MU frame. The frame format, for example, includes a short training field (Short Training field, abbreviated as STF), a long training field (Long Training field, abbreviated as LTF), a double guard interval (double guard interval, abbreviated as DGI), a long training symbol (long training symbol, abbreviated as LTS), a single field (signal, abbreviated as SIG), and the like. An LTF2...LTF_N_{LTF} in FIG. 4 is used in channel estimation of different transmit antennas, and a MU-LTF1... in FIG. 5 is used in channel estimation of different transmit antennas of different users. The frame formats in FIG. 4 and FIG. 5 are conventional formats, which are not further detailed. In this embodiment, FIG. 4 and FIG. 5 are mainly used to illustrate the position of the SIG used to bear the subcarrier allocation information.

There are reserved bits in the SIG As shown in the following Table 1, Table 2, and Table 3, the quantity of reserved bits in the SIG are described by using the SIGA and the SIGB whose bandwidths are greater than or equal to 2 MHz in the 802.11ah standard as an example.

**Table 1 Format of the SIGA**

| **sub field** | **SU** | **MU** |
|---|---|---|
| Length / Duration | 9 | 9 |
| MCS | 4 | |
| BW | 2 | 2 |
| Aggregation | 1 | |
| STBC | 1 | 1 |
| Coding | 2 | 5 |
| SGI | 1 | 1 |
| GID | | 6 |
| Nsts | 2 | 8 |
| PAID | 9 | |
| ACK Indication | 2 | 2 |
| Reserved | 5 | 4 |
| CRC | 4 | 4 |
| Tail | 6 | 6 |
| Total | 48 | 48 |

**Table 2 Format of the SIGB**

| | **BW** | | | |
|---|---|---|---|---|
| | **2MHz** | **4MHz** | **8MHz** | **16MHz** |
| MCS | 4 | 4 | 4 | 4 |
| Tail | 6 | 6 | 6 | 6 |
| CRC | 8 | 8 | 8 | 8 |
| Reserved | 8 | 9 | 11 | 11 |
| Total | 26 | 27 | 29 | 29 |

For example, in the foregoing Table 1, the SIGA includes such sub fields (sub field) as a modulation and coding scheme (modulation and coding scheme, abbreviated as MCS), a bandwidth (bandwidth, abbreviated as BW), a space time block code (space time block code, abbreviated as STBC), coding (Coding), and the like. The format is a conventional format, which is not further detailed. In this embodiment, Table 1 and Table 2 are mainly used to describe that there are reserved bits, that is, Reserved in the Table 1 and Table 2 in the SIG.

**Table 3 Quantity of reserved bits in the SIG and quantity of subcarriers**

| **Bandwidth** | | **Quantity of reserved bits in the SIG** | **Quantity of FFT points** | **Quantity of data carriers** | **Quantity of pilot carriers** |
|---|---|---|---|---|---|
| 1MHz | Single user SU | 4 | 32 | 24 | 2 |
| 2MHz | Single user SU | 5 | 64 | 52 | 4 |
| | Multiuser MU | 12 | | | |
| 4MHz | Single user SU | 5 | 128 | 108 | 6 |
| | Multiuser MU | 13 | | | |
| 8MHz | Single user SU | 5 | 256 | 234 | 8 |
| | Multiuser MU | 15 | | | |
| 16MHz | Single user SU | 5 | 512 | 468 | 16 |
| | Multiuser MU | 15 | | | |

On the basis of the foregoing SIG format, this embodiment provides two optional methods of setting the subcarrier allocation information in the SIG:

One method of setting the subcarrier allocation information is setting the subcarrier allocation information in reserved bits (reserved) in the signal field. In this way, the sizes of existing reserved bits in the SIG do not need to be changed. The following describes, by using a method of grouping subcarriers with respect to each bandwidth in Table 3, a space occupied by the set subcarrier allocation information to describe that the reserved bits can bear the subcarrier allocation information. The quantity of subcarriers in the following subcarrier groups may be changed during the specific implementation:
1. 1 MHz corresponds to 24 data subcarriers, and there are four reserved bits in the SIG.
   24 data subcarriers are classified into three groups, with each group including 10 subcarriers, and the subcarrier allocation information may be represented directly by using a bitmap method, where the subcarrier allocation information needs to occupy only three bits.
2. 2 MHz corresponds to 52 data subcarriers. For a single user SU, there are five reserved bits in the SIG; for a multiuser MU, there are 12 reserved bits in the SIG.
   52 data subcarriers are classified into five groups, with each group including 10 or 11 subcarriers; and the subcarrier allocation information may be directly represented by using a bitmap method, where the subcarrier allocation information needs to occupy only five bits.
3. 4 MHz corresponds to 108 data subcarriers. For a SU, there are five reserved bits in the SIG; for a MU, there are 13 reserved bits in the SIG.
   108 data subcarriers are classified into ten groups, with each group including 10 or 11 subcarriers; and the subcarrier allocation information is represented by using a bitmap method, where the subcarrier allocation information needs to occupy only 10 bits (applicable to the MU).
   108 data subcarriers are classified into five groups, with each group including 21 or 22 subcarriers; and the subcarrier allocation information is represented by using a bitmap method, where the subcarrier allocation information needs to occupy only five bits.
4. 8 MHz corresponds to 234 data subcarriers. For a SU, there are five reserved bits in the SIG; for a MU, there are 15 reserved bits in the SIG.
   234 data subcarriers are classified into 22 groups, with each group including 10 or 11 subcarriers; the subcarrier allocation information is represented by using a successive allocation method, where the subcarrier allocation information needs to occupy only 8 bits (the size of the occupied space may be calculated by using the following known formula: Vlog2 (quantity of subcarriers (groups) × [quantity of subcarriers (groups) + 1] ÷ 2)®).
   234 data subcarriers are classified into five groups, with each group including 46 or 47 subcarriers; and the subcarrier allocation information is represented by using a bitmap method, where the subcarrier allocation information needs to occupy only five bits.
5. 16 MHz corresponds to 468 data subcarriers. For a SU, there are five reserved bits in the SIG; for a MU, there are 15 reserved bits in the SIG.

468 data subcarriers are classified into 43 groups, with each group including 10 or 11 subcarriers; and the subcarrier allocation information is represented by using a successive allocation method, where the subcarrier allocation information needs to occupy only 10 bits (applicable to the MU because the quantity of reserved bits of the MU are greater than 10 bits).

468 data subcarriers are classified into five groups, with each group including 93 or 94 subcarriers; and the subcarrier allocation information is represented by using a bitmap method, where the subcarrier allocation information needs to occupy only five bits.

In the foregoing example, a specific representation method of the subcarrier allocation information, for example, the bitmap method or the successive allocation method, may be freely selected for each bandwidth, so long as there are enough reserved bits used to bear the subcarrier allocation information. In addition, considering that the SU have only a few reserved bits with a large bandwidth, to ensure that the subcarrier allocation information can be borne, data of the SU may be sent by using a frame structure of the MU, because the MU has many reserved bits.

Another method of setting the subcarrier allocation information is adding a sub field (sub field) to the SIG to bear the subcarrier allocation information. The following is based on that a new sub field is added to the SIGA with a bandwidth of 2 MHz.

**Table 4 Format of the SIGA**

| **sub field** | **SU** | **MU** |
|---|---|---|
| Length / Duration | 9 | 9 |
| MCS | 4 | |
| BW | 2 | 2 |
| Aggregation | 1 | |
| STBC | 1 | 1 |
| Coding | 2 | 5 |
| SGI | 1 | 1 |
| GID | | 6 |
| Nsts | 2 | 8 |
| PAID | 9 | |
| ACK Indication | 2 | 2 |
| Reserved | 5 | 4 |
| CRC | 4 | 4 |
| Tail | 6 | 6 |
| sub-carrier allocation | 5 | 5 |
| Total | 53 | 53 |

In the foregoing Table 4, a sub-carrier allocation sub field is added, and is used to bear the subcarrier allocation information; in Table 4, five bits are allocated to the new sub field sub-carrier allocation. By comparing Table 4 with Table 2, the total quantity of bits in the SIG remains the same in this method, that is, still 48 bits.

Further, if the method of grouping subcarriers is used, an indication indicating the size of a subcarrier group may be further added to the sent SIG to indicate how many subcarriers are classified into one subcarrier group. For example, in the foregoing Table 4, a sub field may be further added to indicate the size of a subcarrier group. During the specific implementation, the indication indicating the size of a subcarrier group is optional, for example, the size of a group may be preset; because both the receiving end and the transmitting end already know the group, the size of the group does not need to be notified to the receiving end and the transmitting end.

305. The transmitting end sends data that carries the subcarrier allocation information to the receiving end.

The transmitting end bears the data on a subcarrier indicated by the subcarrier allocation information, and sends the data to the receiving end. In addition, the transmitting end sends the subcarrier allocation information set in the signal field to the receiving end.

306. The receiving end receives the data on a subcarrier indicated by the subcarrier allocation information.

For example, assuming that the subcarrier allocation information is "11100" which indicates that the data is transmitted in only first three subcarriers, the receiving end can receive the data only on the first three subcarriers.

### Embodiment 4

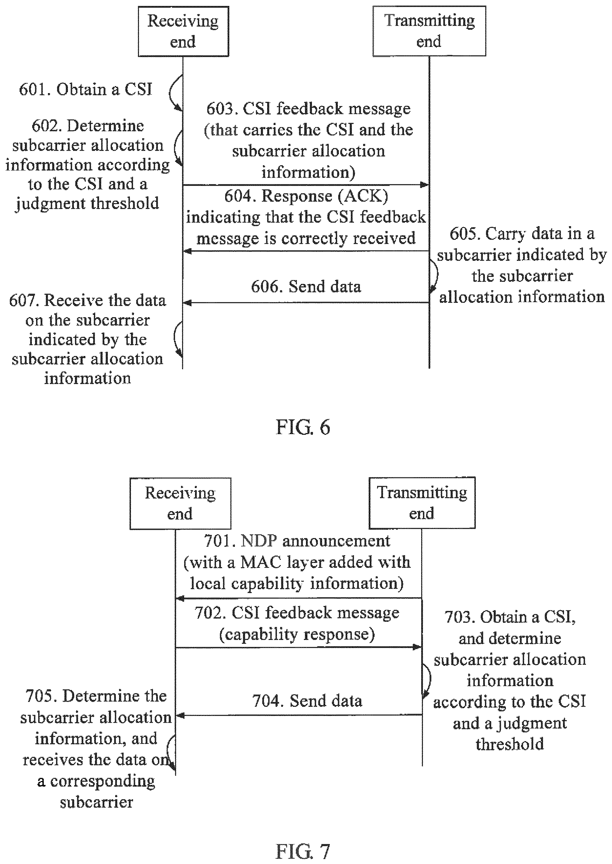

FIG. 6 is a schematic signaling diagram of a method for allocating WLAN channel resources according to still another embodiment of the present invention. In this embodiment, a receiving end determines a selected subcarrier according to a local CSI, and notifies a transmitting end of the selected subcarrier. As shown in FIG. 6, the method may include the following steps:
601. A receiving end performs channel estimation to obtain a CSI.

The receiving end performs channel estimation according to a signal transmitted by a transmitting end to obtain the CSI. In this step, the channel is measured by using a common method, which is not further detailed.

Channel estimation is performed according to a measurement signal received from the transmitting device to obtain the CSI.

602. The receiving end determines subcarrier allocation information according to the CSI and a preset judgment threshold.

The judgment threshold may be pre-configured at the receiving end. The method of determining the subcarrier allocation information by the receiving end according to the CSI and the preset judgment threshold is the same as the execution method of the transmitting end in Embodiment 3, and the representation method of the subcarrier allocation information is also the same. For details, reference may be made to the description in Embodiment 3, which is not further described.

603. The receiving end sends a CSI feedback message to the transmitting end, where the CSI feedback message carries the obtained CSI and the subcarrier allocation information.

In this embodiment, the receiving end may add the subcarrier allocation information to the CSI feedback message, and feed back the CSI feedback message to the transmitting end. As shown in the following Table 5, besides the CSI, the subcarrier allocation information is added. For the representation method of the subcarrier allocation information, refer to Embodiment 3, which is used to identify a selected subcarrier, and may use a bitmap method or a successive allocation method. Optionally, if a method of grouping subcarriers is used, an indication indicating the size of a subcarrier group may also be added to the CSI feedback message.

**Table 5 Information carried in the CSI feedback message**

| | | |
|---|---|---|
| CSI | Subcarrier allocation information | Size of a subcarrier group |

During the specific implementation, the CSI feedback message may be sent by using an existing CSI feedback process, for example, using a null data packet (null data packet, abbreviated as NDP) method. The transmitting end firstly sends an NDP announcement (null data packet announcement), and then sends an NDP packet; after receiving the NDP packet, the receiving end may feed back a CSI immediately after a short interframe space (short interframe space, abbreviated as SIFS) time or the receiving end feeds back a CSI after competing a channel (that is, delay feedback).

604. After receiving the CSI feedback message, the transmitting end feeds back a response ACK indicating that the CSI feedback message is correctly received.

Preferably, after receiving the subcarrier allocation information in the CSI feedback message, the transmitting end may feed back an ACK to the receiving end to inform the receiving end that the transmitting end has already received the subcarrier allocation information correctly. In this way, it can be better ensured that the receiving end and the transmitting end obtain the same information.

605. The transmitting end bears, according to the subcarrier allocation information, data on a subcarrier indicated by the subcarrier allocation information, that is, a selected subcarrier.

606. The transmitting end sends the data to the receiving end.

607. The receiving end receives, according to the subcarrier allocation information determined by the receiving end, the data on the subcarrier indicated by the sub carrier allocation information.

In this step, the receiving end receives the data on the selected subcarrier according to the subcarrier allocation information obtained by the receiving end in 603.

### Embodiment 5

FIG. 7 is a schematic signaling diagram of a method for allocating WLAN channel resources according to still another embodiment of the present invention. In this embodiment, a transmitting end a receiving end determines a selected subcarrier respectively, but the transmitting end and the receiving end uses a same selection method and a same judgment threshold to ensure that subcarriers determined by the transmitting end and the receiving end are the same.

In this embodiment, an example where the transmitting end and the receiving end firstly know, through upper layer signaling, that the peer end supports scheduling of a part of subcarriers, and then execute determining a selected subcarrier respectively is taken for description. In addition, the upper layer signaling is exemplarily a medium access control (Medium Access Control, abbreviated as MAC) layer signaling. As shown in FIG. 7, the method may include the following steps:

701. A transmitting end sends an NDP announcement to a receiving end, and adds to a MAC layer of the NDP announcement local capability information used to indicate that scheduling of a part of subcarriers is locally supported.

The scheduling of a part of subcarriers means that data is sent on a selected subcarrier while unselected subcarriers are not used and are in a reserved state, which is relative to the full-bandwidth allocation in the prior art.

The NDP announcement is used to announce that an NDP packet will be sent subsequently. In this embodiment, the transmitting end adds the capability information to the MAC layer of the NDP announcement sent to the receiving end, where the capability information is used to inform the receiving end that the transmitting end supports scheduling of a part of subcarriers. The method of identifying the foregoing capability information is not limited by this embodiment, for example, "1" may be used to indicate that scheduling of a part of subcarriers is supported, and "0" may be used to indicate that scheduling of a part of subcarriers is not supported.

Optionally, this embodiment further provides two methods of setting the foregoing capability information at the MAC layer:

One method is as follows: Because the MAC layer does not differentiate an instruction frame from a data frame, but differentiates only a control frame, a management frame, and a data frame, a new frame (one of the foregoing control frame, management frame, and data frame) may be defined. For example, a MAC management frame is added and is specifically used to indicate a capability of scheduling a part of subcarriers.

The other method is as follows: Similar to the foregoing method of setting the subcarrier allocation information, a new field may be added to a frame of the MAC layer, or reserved bits (reserved bits) of a field in a frame are used.

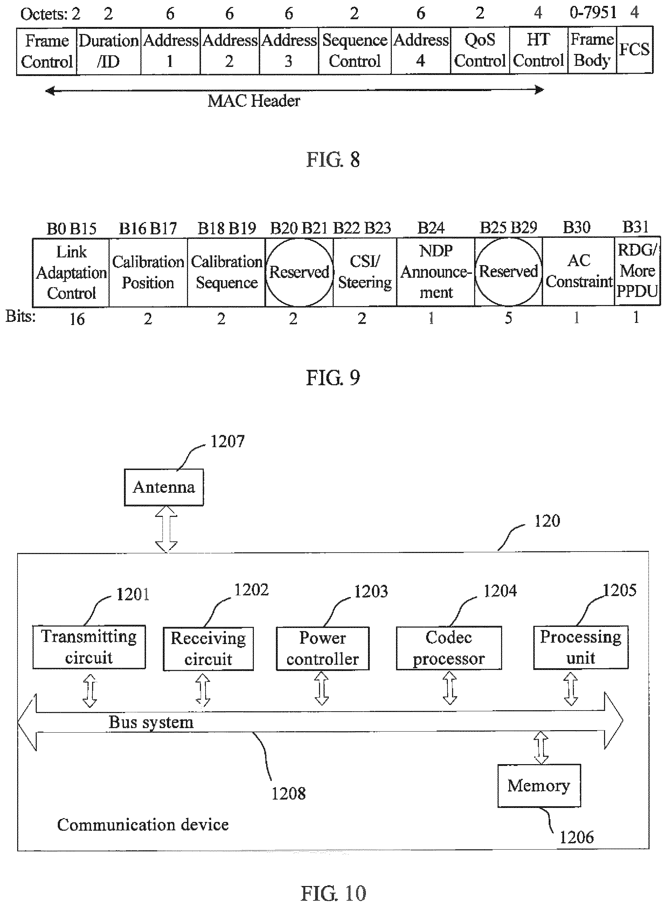

For example, reference may be made to FIG. 8 and FIG. 9. FIG. 8 is a schematic diagram illustrating a format of a MAC management frame in a method for allocating WLAN channel resources according to still another embodiment of the present invention. FIG. 9 is a schematic diagram illustrating a format of an HT (high throughput) control field in FIG. 8. There are seven reserved bits (Reserved) in an HT control field of the MAC management frame, where the reserved bits may be used to bear the capability information of scheduling a part of subcarriers.

702. The receiving end sends a CSI feedback message to the transmitting end, where the CSI feedback message carries a capability response.

After receiving the NDP packet, the receiving end feeds back a CSI to the transmitting end, and meanwhile may carry a capability response to the capability information sent by the transmitting end in 701 in the CSI feedback message, where the capability response is used to indicate that the receiving end also supports the scheduling of a part of subcarriers. For example, the capability response may use field 0 and field 1 to indicate whether the receiving end supports the scheduling of a part of subcarriers, for example, 1 indicates that the receiving end supports the scheduling of a part of subcarriers, and 0 indicates that the receiving end does not support the scheduling of a part of subcarriers; or the capability response may use a field to indicate whether the receiving end supports the scheduling of a part of subcarriers, for example, if the field exists, it indicates that the receiving end supports the scheduling of a part of subcarriers; if the field does not exist, it indicates that the receiving end does not support the scheduling of a part of subcarriers.

If the receiving end does not support the scheduling of a part of subcarriers, the receiving end does not feed back a capability response. In this case, when the transmitting end does not receive the capability response, the transmitting end does not use the method of scheduling a part of subcarriers, but still uses the full-bandwidth allocation method.

703. The transmitting end obtains a CSI, and determines subcarrier allocation information according to the CSI and a preset judgment threshold.

After receiving the capability response in 702, the transmitting end knows that the receiving end also supports the scheduling of a part of subcarriers, and then the transmitting end obtains the CSI, and determines the subcarrier allocation information according to the CSI and the preset judgment threshold.

Optionally, the method of obtaining the CSI by the transmitting end may be as follows: The transmitting end may receive a feedback CSI sent by the receiving end in 702, or the transmitting end may perform channel estimation to obtain the CSI according to a channel reciprocity and by receiving a preamble signal sent by the receiving end, where the channel reciprocity means that a channel CSI from the transmitting end to the receiving end is approximately equal to a CSI from the receiving end to the transmitting end and that the channel CSI and the CSI may be mutually replaced. Therefore, if the transmitting end does not use the CSI fed back by the receiving end, the transmitting end may measure the CSI from the receiving end to the transmitting end, where the measured CSI may represent the CSI fed back by the receiving end.

704. The transmitting end sends data to the receiving end.

705. The receiving end determines the subcarrier allocation information, and receives the data on a corresponding subcarrier.

This embodiment is different from the foregoing embodiment in that: The transmitting end does not need to inform the receiving end of the subcarrier allocation information obtained by the transmitting end; and the receiving end and the transmitting end obtains the subcarrier allocation information respectively.

For example, if the receiving end receives the capability information sent by the transmitting end during the receiving of the NDP announcement and knows that the transmitting end supports the scheduling of a part of subcarriers, the receiving end performs local measurement to obtain the CSI, and obtains the subcarrier allocation information according to the CSI and the preset judgment threshold. In this way, the receiving end knows which subcarriers are used by the transmitting end to send the data, and then receives the data on these subcarriers. Because the receiving end and the transmitting end uses the same CSI and the same judgment threshold (the judgment threshold may be pre-configured on both the transmitting end and the receiving end), the subcarrier allocation information obtained by the receiving end and the transmitting end is also the same.

For another example, the receiving end may also measure, after receiving the data sent by the transmitting end, power of each subcarrier and judge which subcarriers are used by the transmitting end to send the data; when the receiving end make judgment by using subcarrier power, a preset judgment threshold may also be used, where the judgment threshold is the same as the judgment threshold used when the receiving end make judgment by using the CSI, and is also the same as the judgment threshold used by the transmitting end. Because the CSI and the subcarrier power are substantially measurement of power, a same threshold may be used, and a same judgment method may be used.

The embodiment of the present invention further provides an apparatus embodiment for implementing steps and methods in the foregoing method embodiments. To clearly describe the structure of the apparatus in the embodiment of the present invention, the following firstly provides a schematic structural diagram of a communication device. FIG. 10 is a schematic structural diagram of a communication device according to an embodiment of the present invention. As shown in FIG. 10, the communication device 120 includes a transmitting circuit 1201, a receiving circuit 1202, a power controller 1203, a codec processor 1204, a processing unit 1205, a memory 1206, and an antenna 1207. The processing unit 1205 controls operations of the communication device 120, and the processing unit 1205 may also be called a central processing unit CPU. The memory 1206 may include a read-only memory and a random access memory, and provides the processing unit 1205 with instructions and data. One part of the memory 1206 may further include a non-volatile random access memory (NVRAM). In specific applications, the communication device 120 may be embedded into or be a wireless communication device such as mobile phone, and may further include a carrier accommodating the transmitting circuit 1201 and the receiving circuit 1202 to allow data transmission and receiving performed between the communication device 120 and a remote device. The communication device 120 may also be a communication system device such as base station. The transmitting circuit 1201 and the receiving circuit 1202 may be coupled into the antenna 1207. All components of the communication device 120 are coupled together through a bus system 1208, where the bus system 1208 further includes a power bus, a control bus, and a status signal bus besides a data bus. For clear description, various buses are marked as the bus system 1208 in the figure.

The methods disclosed in the foregoing embodiments of the present invention may be applied to the communication device 120. The processing unit 1205 may be an integrated circuit chip and has a signal processing capability. During the implementation, all steps of the foregoing method may be completed by an integrated logic circuit of hardware in the processing unit 1205 or by instructions in software forms. These instructions may be implemented and controlled in coordination with the processing unit 1205, and are used to execute the methods disclosed in the embodiments of the present invention. The foregoing codec processor and processing unit may be a universal processor, a digital signal processor (DSP), an application-specific integrated circuit (ASIC), a field programmable gate array (FPGA), or another programmable logic device, a discrete gate, or a transistor logic device, or a discrete hardware component, which can implement or execute the methods, steps or logical frameworks disclosed in the embodiments of the present invention. The universal processor may be a microprocessor or the processor may be any conventional processor, decoder, and the like. Steps of the methods disclosed in the embodiments of the present invention may be directly executed by a hardware codec processor or by a combination of hardware and software modules in the codec processor. The software modules may be located in a mature storage medium in this field, such as a random memory, a flash memory, a read-only memory, a programmable read-only memory, an electrically erasable programmable memory, or a register. The storage medium is located in the memory 1206. A decoding unit reads information in the memory 1206, and executes the steps of the foregoing methods by using hardware of the decoding unit.

The structures of the transmitting device and the receiving device that are provided in the embodiments of the present invention are described in the following with reference to the structure of the foregoing communication device 120.

### Embodiment 6

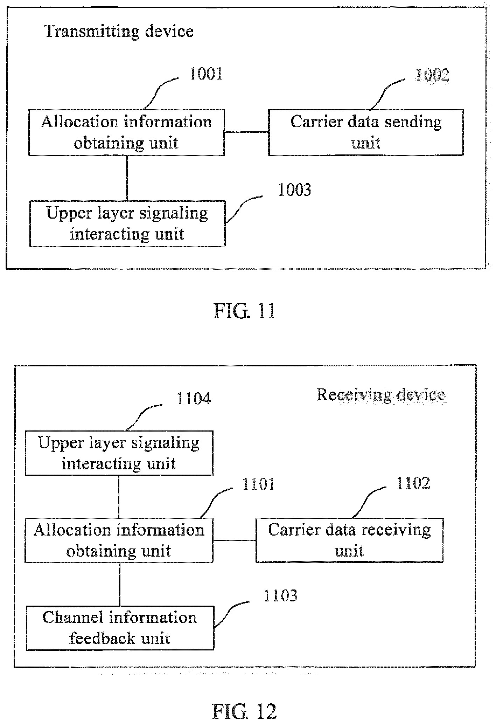

FIG. 11 is a schematic structural diagram of a transmitting device according to an embodiment of the present invention. The transmitting device can execute the method for allocating WLAN channel resources provided in any embodiment of the present invention. The transmitting device provided in this embodiment can implement the steps and functions in the foregoing method embodiments. For details of the specific process of implementing allocation of WLAN channel resources, reference may be made to the description in the method embodiments.

As shown in FIG. 11, the transmitting device may be an STA or an AP. The transmitting device may include an allocation information obtaining unit 1001 and a carrier data sending unit 1002.

The allocation information obtaining unit 1001 is configured to obtain subcarrier allocation information, where the subcarrier allocation information is used to identify a selected subcarrier or a subcarrier group used to bear data, where channel quality of a subchannel where the subcarrier or the subcarrier group is located is greater than or equal to a judgment threshold.

The carrier data sending unit 1002 is configured to send data on the selected subcarrier according to the subcarrier allocation information, where unselected subcarriers may be reserved.

The foregoing allocation information obtaining unit 1001 may be one logic unit or one logic circuit or one function module in the processing unit 1205 of the communication device 120. In conclusion, the allocation information obtaining unit 1001 may be the processing unit 1205 or one part of the processing unit 1205. The carrier data sending unit 1002 may be one part of the transmitting circuit 1201 or the transmitting circuit 1201, and implements data transmission by using a coupled antenna.

Further, the allocation information obtaining unit 1001 is specifically configured to determine the subcarrier allocation information according to channel state information CSI fed back by a receiving device and a preset judgment threshold.

The carrier data sending unit 1002 is further configured to send the subcarrier allocation information to the receiving device before sending the data on the selected subcarrier, for example, set the subcarrier allocation information in a signal field, and send the signal field to the receiving device, so that the receiving device receives the data on the selected subcarrier according to the subcarrier allocation information.

Further, the allocation information obtaining unit 1001 is specifically configured to perform channel estimation according to a measurement signal received from the receiving device to obtain the CSI, and determine the subcarrier allocation information according to the CSI and the preset judgment threshold.

Further, the transmitting device may further include: an upper layer signaling interacting unit 1003, configured to send upper layer signaling to the receiving device before the allocation information obtaining unit 1001 obtains the subcarrier allocation information, where the upper layer signaling carries capability information used to indicate that scheduling of a part of subcarriers is supported locally.

The allocation information obtaining unit 1001 is further configured to receive a capability response fed back by the receiving device, where the capability response is used to indicate that the receiving device also supports the scheduling of a part of subcarriers, to instruct, according to the capability response, the allocation information obtaining unit to execute the obtaining of subcarrier allocation information.

The foregoing upper layer signaling interacting unit 1003 may be the transmitting circuit 1201 or one part of the transmitting circuit 1201 in the communication device 120, and implement data transmission by using a coupled antenna.

Further, the allocation information obtaining unit 1001 is specifically configured to receive a CSI feedback message sent by the receiving device, where the CSI feedback message carries the CSI and the subcarrier allocation information.

### Embodiment 7

FIG. 12 is a schematic structural diagram of a receiving device according to an embodiment of the present invention. The receiving device can execute the method for allocating WLAN channel resources provided in any embodiment of the present invention. The receiving device in this embodiment can implement the steps and functions in the foregoing method embodiments. For details of the specific process of implementing allocation of WLAN channel resources, reference may be made to the description in the method embodiments.

As shown in FIG. 12, the receiving device may be an STA or an AP. The receiving device may include an allocation information obtaining unit 1101 and a carrier data receiving unit 1102.

The allocation information obtaining unit 1101 is configured to obtain subcarrier allocation information, where the subcarrier allocation information is used to identify a selected subcarrier or a subcarrier group used to bear data, where channel quality of a subchannel where the subcarrier or the subcarrier group is located is greater than or equal to a judgment threshold and remaining subcarriers in the channel are reserved.

The carrier data receiving unit 1102 is configured to receive data on the selected subcarrier or subcarrier group according to the subcarrier allocation information.

The foregoing allocation information obtaining unit 1101 may be one logic unit or one logic circuit or one function module in the processing unit 1205 of the communication device 120. In conclusion, the allocation information obtaining unit 1101 may be the processing unit 1205 or one part of the processing unit 1205. The carrier data receiving unit 1102 may be one part of the transmitting circuit 1201 or the transmitting circuit 1201, and implements data transmission by using a coupled antenna.

Further, the allocation information obtaining unit 1101 is specifically configured to perform channel estimation according to a measurement signal received from the transmitting device to obtain a CSI, and determine the subcarrier allocation information according to the CSI and the preset judgment threshold.

The receiving device further includes: a channel information feedback unit 1103, configured to: after the allocation information obtaining unit 1101 determines the subcarrier allocation information and before the data is received on the selected subcarrier according to the subcarrier allocation information, send the subcarrier allocation information to a transmitting device, for example, send a CSI feedback message to the transmitting device, where the CSI feedback message carries the subcarrier allocation information, so that the transmitting device sends the data on the selected subcarrier according to the subcarrier allocation information.

Further, the receiving device may further include: an upper layer signaling interacting unit 1104, configured to receive upper layer signaling sent by the transmitting device before the subcarrier allocation information is obtained, where the upper layer signaling carries capability information used to indicate that the transmitting device supports scheduling of a part of subcarriers, where the scheduling of a part of subcarriers means that the data is sent on the selected subcarrier and unselected subcarriers are reserved.

The channel information feedback unit 1103 is further configured to return a capability response to the transmitting device, where the capability response is used to indicate that the scheduling of a part of subcarriers is also supported locally.

The foregoing channel information feedback unit 1103 may be one part of the transmitting circuit 1201 or the transmitting circuit 1201 in the communication device 120; the upper layer signaling interacting unit 1104 may be one part of the receiving circuit 1202 or the receiving circuit 1202 in the communication device 120; and the channel information feedback unit 1103 and the upper layer signaling interacting unit 1104 implement data transmission or receiving by using a coupled antenna.

Further, the allocation information obtaining unit 1101 is specifically configured to receive a signal field sent by the transmitting device, where the signal field is set with the subcarrier allocation information.

### Embodiment 8

An embodiment of the present invention provides a wireless local area network communication system, including the transmitting device in any embodiment of the present invention and the receiving device in any embodiment of the present invention. For details about the structures and working principles of the transmitting device and the receiving device, reference may be made to descriptions in the method embodiments and device embodiments of the present invention.

Persons of ordinary skill in the art may understand that, all or a part of the steps of the foregoing method embodiments may be implemented by a program instructing relevant hardware. The foregoing programs may be stored in a computer readable storage medium. When the program runs, the steps of the forgoing method embodiments are performed. The foregoing storage medium includes various mediums capable of storing program code, such as a ROM, a RAM, a magnetic disk, or an optical disc.

Finally, it should be noted that, the foregoing embodiments are merely intended for describing the technical solutions of the present invention, rather than limiting the present invention defined by the appended claims.

### Embodiment 9

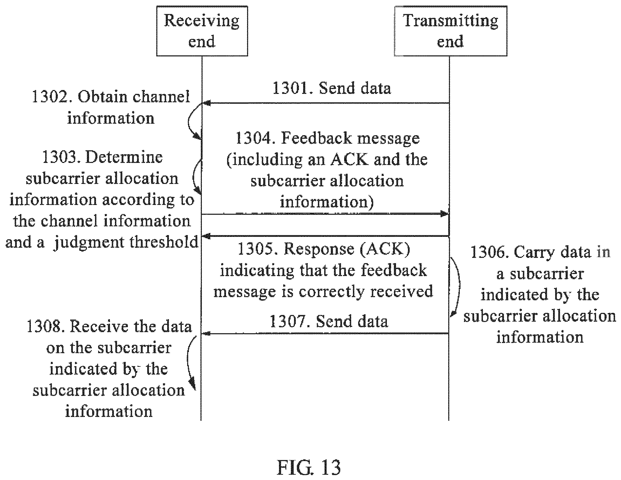

FIG. 13 is a schematic signaling diagram of a method for allocating WLAN channel resources according to still another embodiment of the present invention. In this embodiment, a receiving end receives a previous frame sent by a transmitting end, obtains a local CSI according to channel measurement information of the previous frame, determines a selected subcarrier, and notifies the transmitting end of the selected subcarrier. As shown in FIG. 13, the method may include the following steps:
1301. A transmitting end sends a data frame to a receiving end.

The data frame may be a MAC control frame, a MAC management frame, a common data frame, and the like, which is not limited.

1302. The receiving end performs channel estimation to obtain channel information.

The receiving end performs channel estimation according to a signal transmitted by the transmitting end to obtain the channel information. In this step, the channel is measured by using a common method, which is not further detailed.

Channel estimation is performed according to a measurement signal received from the transmitting device to obtain the channel information.

The channel information is a CSI.

The measurement signal may be an LTF and an STF in a preamble or a pilot signal in a data field and a signal field, and the like, which is not limited.

The LTF in the preamble includes an LTE in the 11a/g standard, an L-LTF (Non-High Throughput Long Training field, non-high throughput long training field), an HT-LTF(High Throughput Long Training field, high throughput long training field), an HT-LTF1 (First High Throughput Long Training field, first high throughput long training field), and HT-LTFs (Additional High Throughput Long Training fields, additional high throughput long training fields) in the 11n standard, a VHT-LTF (very High Throughput Long Training field, very high throughput long training field) in the 11ac standard, and a D-LTF in the 11ah, which is not limited.

1303. The receiving end determines subcarrier allocation information according to the channel information and a preset judgment threshold.

The judgment threshold may be pre-configured at the receiving end. The method of determining the subcarrier allocation information by the receiving end according to the channel information and the preset judgment threshold is the same as the execution method of the transmitting end in Embodiment 3, and the representation method of the subcarrier allocation information is also the same. For details, reference may be made to the description in Embodiment 3, which is not further described.

1304. The receiving end sends a feedback message to the transmitting end, where the feedback message carries feedback information and the subcarrier allocation information.

In this embodiment, the receiving end may add the subcarrier allocation information to the feedback message, and feed back the feedback message to the transmitting end. As shown in the following Table 6, besides the feedback message, the subcarrier allocation information is added. For details of the representation method of the subcarrier allocation information, refer to Embodiment 3, which is used to identify a selected subcarrier, and may use a bitmap method or a successive allocation method. Optionally, if a method of grouping subcarriers is used, an indication indicating the size of a subcarrier group may also be added to the feedback message.

The feedback message may be an acknowledgement frame (ACK frame) or a block acknowledgment frame (Block ACK frame), or a short acknowledgment frame (short ACK frame), or a short block acknowledgment frame (short Block ACK frame), or another MAC control frame, a MAC management frame, a common data frame, and the like.

A position used to bear the feedback message at a physical layer may be a data field (data field) of the acknowledgment frame (ACK frame), or a data field (data field) of the block acknowledgment frame (Block ACK frame), or a signal field (SIG field) of the short acknowledgement frame (short ACK frame), or a signal field (SIG field) of the short block acknowledgment (short Block ACK frame), or a data field or a signal field of the MAC control frame, the MAC management frame, and the common data frame.

**Table 6 Information carried in the feedback message**

| | | |
|---|---|---|
| **Feedback message** | **Subcarrier allocation information** | **Size of a subcarrier group** |

During the specific implementation, the feedback message may be sent by using an existing acknowledgement feedback process. For example, the transmitting end firstly sends a data frame (data frame); after receiving an LTF in the preamble, the receiving end may feed back an ACK immediately after a short interframe space (short interframe space, abbreviated as SIFS) time, or the receiving end feeds back an ACK after competing a channel (that is, delay feedback).

1305. After receiving the feedback message, the transmitting end feeds back a response ACK indicating that the feedback message is correctly received.

Preferably, after receiving the subcarrier allocation information in the CSI feedback message, the transmitting end may feed back an ACK to the receiving end to inform the receiving end that the transmitting end has already received the subcarrier allocation information correctly. In this way, it may be better ensured that the receiving end and the transmitting end obtain the same information.

1306. The transmitting end bears, according to the subcarrier allocation information, data in a subcarrier indicated by the subcarrier allocation information, that is, a selected subcarrier.

1307. The transmitting end sends the data to the receiving end.

1308. The receiving end receives, according to the subcarrier allocation information determined by the receiving end, the data on the subcarrier indicated by the subcarrier allocation information.

In this step, the receiving end receives the data on the selected subcarrier according to the subcarrier allocation information obtained by the receiving end in 1303.

Persons of ordinary skill in the art may understand that, all or a part of the steps of the foregoing method embodiments may be implemented by a program instructing relevant hardware. The foregoing programs may be stored in a computer readable storage medium. When the program runs, the steps of the forgoing method embodiments are performed. The foregoing storage medium includes various mediums capable of storing program code, such as a ROM, a RAM, a magnetic disk, or an optical disc.

Finally, it should be noted that, the foregoing embodiments are merely intended for describing the technical solutions of the present invention, rather than limiting the present invention defined by the appended claims.

## Claims

1. A method for allocating WLAN channel resources, comprising:
obtaining (101) subcarrier allocation information, wherein the subcarrier allocation information is used to identify a subcarrier or a subcarrier group used to bear data,
wherein channel quality of a subchannel where the subcarrier or the subcarrier group is located is greater than or equal to a judgment threshold; and
sending (102) data to a receiving device on the subcarrier or the subcarrier group according to the subcarrier allocation information,
**characterized in that** the subcarrier allocation information comprises: an identifier of a first subcarrier or a first subcarrier group of multiple successively allocated subcarriers or subcarrier groups and the quantity of the multiple subcarriers or the multiple subcarrier groups; wherein
the obtaining (101) subcarrier allocation information comprises:
receiving a channel state information, CSI, feedback message sent by the receiving device, wherein the CSI feedback message carries the subcarrier allocation information.

2. A method for allocating WLAN channel resources, comprising:
obtaining (201) subcarrier allocation information, wherein the subcarrier allocation information is used to identify a subcarrier or a subcarrier group used to bear data,
wherein channel quality of a subchannel where the subcarrier or the subcarrier group is located is greater than or equal to a judgment threshold; and
receiving data (202), sent by a transmitting device, on the subcarrier or the subcarrier group according to the subcarrier allocation information,
**characterized in that** the subcarrier allocation information comprises: an identifier of a first subcarrier or a first subcarrier group of multiple successively allocated subcarriers or subcarrier groups and the quantity of the multiple subcarriers or the multiple subcarrier groups; wherein
the obtaining (201) subcarrier allocation information comprises:
performing channel estimation according to a measurement signal received from the transmitting device to obtain channel state information CSI; and
determining the subcarrier allocation information according to the CSI and the judgment threshold and after the determining the subcarrier allocation information and before the receiving data on the subcarrier or the subcarrier group according to the sub-carrier allocation in-formation, the method further comprises:
sending a CSI feedback message to the transmitting device, wherein the CSI feedback message carries the subcarrier allocation information, so that the transmitting device is enabled to send the data on the subcarrier or the subcarrier group according to the subcarrier allocation information.

3. A transmitting device of a WLAN, comprising:
an allocation information obtaining unit (1001), configured to obtain subcarrier allocation information, wherein the subcarrier allocation information is used to identify a subcarrier or a subcarrier group used to bear data, wherein channel quality of a subchannel where the subcarrier or the subcarrier group is located is greater than or equal to a judgment threshold; and
a carrier data sending unit (1002), configured to send data to a receiving device on the subcarrier or the subcarrier group according to the subcarrier allocation information, **characterized in that** the subcarrier allocation information comprises: an identifier of a first subcarrier or a first subcarrier group of multiple successively allocated subcarriers or subcarrier groups and the quantity of the multiple subcarriers or the multiple subcarrier groups; wherein
the allocation information obtaining unit (1001) is specifically configured to receive a CSI feedback message sent by the receiving device, wherein the CSI feedback message carries the subcarrier allocation information.

4. A receiving device of a WLAN, comprising:
an allocation information obtaining unit (1101), configured to obtain subcarrier allocation information, wherein the subcarrier allocation information is used to identify a subcarrier or a subcarrier group used to bear data, wherein channel quality of a subchannel where the subcarrier or the subcarrier group is located is greater than or equal to a judgment threshold; and
a carrier data receiving unit (1102), configured to receive data on the subcarrier or the subcarrier group according to the subcarrier allocation information, **characterized in that** the subcarrier allocation information comprises: an identifier of a first subcarrier or a first subcarrier group of multiple successively allocated subcarriers or subcarrier groups and the quantity of the multiple subcarriers or the multiple subcarrier groups; wherein
the allocation information obtaining unit (1101) is specifically configured to perform channel estimation according to a measurement signal received from a transmitting device to obtain channel state information CSI, and determine the subcarrier allocation information according to the CSI and a preset judgment threshold; and
the receiving device further comprises a channel information feedback unit (1103), configured to: after the subcarrier allocation information is determined and before the data is received on the subcarrier or the subcarrier group according to the subcarrier allocation information, send a CSI feedback message to the transmitting device, wherein the CSI feedback message carries the subcarrier allocation information, so that the transmitting device is enabled to send the data on the subcarrier or the subcarrier group according to the subcarrier allocation information.

## Patentansprüche

1. Verfahren zum Zuweisen von WLAN-Kanalressourcen, Folgendes umfassend:
Erzielen (101) von Unterträgerzuweisungsinformationen, wobei die Unterträgerzuweisungsinformationen verwendet werden, um einen Unterträger oder eine Unterträgergruppe, der/die zum Tragen von Daten verwendet wird, zu identifizieren,
wobei eine Kanalqualität eines Unterkanals, in dem sich der Unterträger oder die Unterträgergruppe befindet, größer oder gleich einem Beurteilungsgrenzwert ist, und Senden (102) von Daten an ein empfangendes Gerät auf dem Unterträger oder der Unterträgergruppe gemäß den Unterträgerzuweisungsinformationen,
**dadurch gekennzeichnet, dass** die Unterträgerzuweisungsinformationen Folgendes umfassen: eine Kennung eines ersten Unterträgers oder einer ersten Unterträgergruppe von mehreren aufeinanderfolgend zugewiesenen Unterträgern oder Unterträgergruppen und die Quantität der mehreren Unterträger oder der mehreren Unterträgergruppen, wobei
das Erzielen (101) der Unterträgerzuweisungsinformationen Folgendes umfasst:
Empfangen einer Kanalzustandsinformation-, CSI-, Rückmeldungsnachricht, die von dem empfangenden Gerät gesendet wird, wobei die CSI-Rückmeldungsnachricht die Unterträgerzuweisungsinformationen mitführt.

2. Verfahren zum Zuweisen von WLAN-Kanalressourcen, Folgendes umfassend:
Erzielen (201) von Unterträgerzuweisungsinformationen, wobei die Unterträgerzuweisungsinformationen verwendet werden, um einen Unterträger oder eine Unterträgergruppe, der/die zum Tragen von Daten verwendet wird, zu identifizieren,
wobei eine Kanalqualität eines Unterkanals, in dem sich der Unterträger oder die Unterträgergruppe befindet, größer oder gleich einem Beurteilungsgrenzwert ist, und Empfangen von Daten (202), die von einem übertragenden Gerät gesendet werden, auf dem Unterträger oder der Unterträgergruppe gemäß den Unterträgerzuweisungsinformationen,
**dadurch gekennzeichnet, dass** die Unterträgerzuweisungsinformationen Folgendes umfassen: eine Kennung eines ersten Unterträgers oder einer ersten Unterträgergruppe von mehreren aufeinanderfolgend zugewiesenen Unterträgern oder Unterträgergruppen und die Quantität der mehreren Unterträger oder der mehreren Unterträgergruppen, wobei
das Erzielen (201) von Unterträgerzuweisungsinformationen Folgendes umfasst:
Durchführen einer Kanalschätzung gemäß einem Messsignal, das von dem übertragenden Gerät empfangen wird, um Kanalzustandsinformationen CSI zu empfangen, und
Bestimmen der Unterträgerzuweisungsinformationen gemäß den CSI und dem Beurteilungsgrenzwert, und das Verfahren nach dem Bestimmen der Unterträgerzuweisungsinformationen und vor dem Empfangen von Daten auf dem Unterträger oder der Unterträgergruppe gemäß den Unterträgerzuweisungsinformationen ferner Folgendes umfasst:
Senden einer CSI-Rückmeldungsnachricht an das übertragende Gerät, wobei die CSI-Rückmeldungsnachricht die Unterträgerzuweisungsinformationen mitführt, so dass das übertragende Gerät in die Lage versetzt ist, die Daten auf dem Unterträger oder der Unterträgergruppe gemäß den Unterträgerzuweisungsinformationen zu senden.

3. Übertragendes Gerät eines WLAN, Folgendes umfassend:
eine Zuweisungsinformationen-Erzielungseinheit (1001), die dafür konfiguriert ist, Unterträgerzuweisungsinformationen zu erzielen, wobei die Unterträgerzuweisungsinformationen verwendet werden, um einen Unterträger oder eine Unterträgergruppe, der/die zum Tragen von Daten verwendet wird, zu identifizieren, wobei eine Kanalqualität eines Unterkanals, in dem sich der Unterträger oder die Unterträgergruppe befindet, größer oder gleich einem Beurteilungsgrenzwert ist, und
eine Trägerdaten-Sendeeinheit (1002), die dafür konfiguriert ist, gemäß den Unterträgerzuweisungsinformationen Daten an ein empfangendes Gerät auf dem Unterträger oder der Unterträgergruppe zu senden,
**dadurch gekennzeichnet, dass** die Unterträgerzuweisungsinformationen Folgendes umfassen: eine Kennung eines ersten Unterträgers oder einer ersten Unterträgergruppe von mehreren aufeinanderfolgend zugewiesenen Unterträgern oder Unterträgergruppen und die Quantität der mehreren Unterträger oder der mehreren Unterträgergruppen, wobei
die Zuweisungsinformationen-Erzielungseinheit (1001) speziell dafür konfiguriert ist, eine CSI-Rückmeldungsnachricht zu empfangen, die von dem empfangenden Gerät gesendet wird, wobei die CSI-Rückmeldungsnachricht die Unterträgerzuweisungsinformationen mitführt.

4. Empfangendes Gerät eines WLAN, Folgendes umfassend:
eine Zuweisungsinformationen-Erzielungseinheit (1101), die dafür konfiguriert ist, Unterträgerzuweisungsinformationen zu erzielen, wobei die Unterträgerzuweisungsinformationen verwendet werden, um einen Unterträger oder eine Unterträgergruppe, der/die zum Tragen von Daten verwendet wird, zu identifizieren, wobei eine Kanalqualität eines Unterkanals, in dem sich der Unterträger oder die Unterträgergruppe befindet, größer oder gleich einem Beurteilungsgrenzwert ist, und
eine Trägerdaten-Empfangseinheit (1102), die dafür konfiguriert ist, gemäß den Unterträgerzuweisungsinformationen Daten auf dem Unterträger oder der Unterträgergruppe zu empfangen,
**dadurch gekennzeichnet, dass** die Unterträgerzuweisungsinformationen Folgendes umfassen: eine Kennung eines ersten Unterträgers oder einer ersten Unterträgergruppe von mehreren aufeinanderfolgend zugewiesenen Unterträgern oder Unterträgergruppen und die Quantität der mehreren Unterträger oder der mehreren Unterträgergruppen, wobei
die Zuweisungsinformationen-Erzielungseinheit (1101) speziell dafür konfiguriert ist, gemäß einem Messsignal, das von einem übertragenden Gerät empfangen wird, eine Kanalschätzung durchzuführen, um Kanalzustandsinformationen CSI zu empfangen, und die Unterträgerzuweisungsinformationen gemäß den CSI und einem voreingestellten Beurteilungsgrenzwert zu bestimmen, und
das empfangende Gerät ferner eine Kanalinformationen-Rückmeldungseinheit (1103) umfasst, die für Folgendes konfiguriert ist: nach dem Bestimmen der Unterträgerzuweisungsinformationen und vor dem Empfangen von Daten auf dem Unterträger oder der Unterträgergruppe gemäß den Unterträgerzuweisungsinformationen eine CSI-Rückmeldungsnachricht an das übertragende Gerät zu senden, wobei die CSI-Rückmeldungsnachricht die Unterträgerzuweisungsinformationen mitführt, so dass das übertragende Gerät in die Lage versetzt ist, die Daten auf dem Unterträger oder der Unterträgergruppe gemäß den Unterträgerzuweisungsinformationen zu senden.

## Revendications

1. Procédé d'attribution de ressources de canaux WLAN, comprenant :
l'obtention (101) d'informations d'attribution de sous-porteuses, où les informations d'attribution de sous-porteuses sont utilisées pour identifier une sous-porteuse ou un groupe de sous-porteuses utilisé(e) pour acheminer des données,
où la qualité de canal d'un sous-canal où la sous-porteuse ou le groupe de sous-porteuses est situé(e) est supérieure ou égale à un seuil de jugement ; et
l'envoi (102) de données à un dispositif de réception sur la sous-porteuse ou le groupe de sous-porteuses selon les informations d'attribution de sous-porteuses,
**caractérisé en ce que** les informations d'attribution de sous-porteuses comprennent :
un identificateur d'une première sous-porteuse ou d'un premier groupe de sous-porteuses de multiples sous-porteuses ou groupes de sous-porteuses attribué(e)s de manière successive et la quantité des multiples sous-porteuses ou des multiples groupes de sous-porteuses ; où
l'obtention (101) des informations d'attribution de sous-porteuses comprend :
la réception d'un message de retour d'informations d'état de canal, CSI, envoyé par le dispositif de réception, où le message de retour de CSI achemine les informations d'attribution de sous-porteuses.

2. Procédé d'attribution de ressources de canaux WLAN, comprenant :
l'obtention (201) d'informations d'attribution de sous-porteuses, où les informations d'attribution de sous-porteuses sont utilisées pour identifier une sous-porteuse ou un groupe de sous-porteuses utilisé(e) pour acheminer des données,
où la qualité de canal d'un sous-canal où la sous-porteuse ou le groupe de sous-porteuses est situé(e) est supérieure ou égale à un seuil de jugement ; et
la réception de données (202), envoyées par un dispositif de transmission, sur la sous-porteuse ou le groupe de sous-porteuses selon les informations d'attribution de sous-porteuses,
**caractérisé en ce que** les informations d'attribution de sous-porteuses comprennent : un identificateur d'une première sous-porteuse ou d'un premier groupe de sous-porteuses de multiples sous-porteuses ou groupes de sous-porteuses attribué(e)s de manière successive et la quantité des multiples sous-porteuses ou des multiples groupes de sous-porteuses ; où
l'obtention (201) d'informations d'attribution de sous-porteuses comprend :
l'exécution d'une estimation de canal selon un signal de mesure reçu du dispositif de transmission pour obtenir des informations d'état de canal CSI ; et
la détermination des informations d'attribution de sous-porteuses selon les CSI et le seuil de jugement et, après la détermination des informations d'attribution de sous-porteuses et avant la réception des données sur la sous-porteuse ou le groupe de sous-porteuses selon les informations d'attribution de sous-porteuses, le procédé comprend en outre :
l'envoi d'un message de retour de CSI au dispositif de transmission, où le message de retour de CSI achemine les informations d'attribution de sous-porteuses, de manière à ce que le dispositif de transmission soit autorisé à envoyer les données sur la sous-porteuse ou le groupe de sous-porteuses selon les informations d'attribution de sous-porteuses.

3. Dispositif de transmission d'un WLAN, comprenant :
une unité d'obtention d'informations d'attribution (1001), configurée pour obtenir des informations d'attribution de sous-porteuses, où les informations d'attribution de sous-porteuses sont utilisées pour identifier une sous-porteuse ou un groupe de sous-porteuses utilisé(e) pour acheminer des données, où la qualité de canal d'un sous-canal où la sous-porteuse ou le groupe de sous-porteuses est situé(e) est supérieure ou égale à un seuil de jugement ; et
une unité d'envoi de données de sous-porteuses (1002), configurée pour envoyer des données à un dispositif de réception sur la sous-porteuse ou le groupe de sous-porteuses selon les informations d'attribution de sous-porteuses,
**caractérisé en ce que** les informations d'attribution de sous-porteuses comprennent : un identificateur d'une première sous-porteuse ou d'un premier groupe de sous-porteuses de multiples sous-porteuses ou groupes de sous-porteuses attribué(e)s de manière successive et la quantité des multiples sous-porteuses ou des multiples groupes de sous-porteuses ; où
l'unité d'obtention d'informations d'attribution (1001) est spécifiquement configurée pour recevoir un message de retour de CSI envoyé par le dispositif de réception, où le message de retour de CSI achemine les informations d'attribution de sous-porteuses.

4. Dispositif de réception d'un WLAN, comprenant :
une unité d'obtention d'informations d'attribution (1101), configurée pour obtenir des informations d'attribution de sous-porteuses, où les informations d'attribution de sous-porteuses sont utilisées pour identifier une sous-porteuse ou un groupe de sous-porteuses utilisé(e) pour acheminer des données, où la qualité de canal d'un sous-canal où la sous-porteuse ou le groupe de sous-porteuses est situé(e) est supérieure ou égale à un seuil de jugement ; et
une unité de réception de données de porteuse (1102), configurée pour recevoir des données sur la sous-porteuse ou le groupe de sous-porteuses selon les informations d'attribution de sous-porteuses,
**caractérisé en ce que** les informations d'attribution de sous-porteuses comprennent : un identificateur d'une première sous-porteuse ou d'un premier groupe de sous-porteuses de multiples sous-porteuses ou groupes de sous-porteuses attribué(e)s de manière successive et la quantité des multiples sous-porteuses ou des multiples groupes de sous-porteuses ; où
l'unité d'obtention d'informations d'attribution (1101) est spécifiquement configurée pour exécuter une estimation de canal selon un signal de mesure reçu d'un dispositif de transmission pour obtenir des informations d'état de canal CSI, et déterminer les informations d'attribution de sous-porteuses selon les CSI et un seuil de jugement prédéfini ; et
le dispositif de réception comprend en outre une unité de retour d'informations de canal (1103), configurée pour: après que les informations d'attribution de sous-porteuses ont été déterminées et avant que les données soient reçues sur la sous-porteuse ou le groupe de sous-porteuses selon les informations d'attribution de sous-porteuses, envoyer un message de retour CSI au dispositif de transmission, où le message de retour de CSI achemine les informations d'attribution de sous-porteuses, de manière à ce que le dispositif de transmission soit autorisé à envoyer les données sur la sous-porteuse ou le groupe de sous-porteuses selon les informations d'attribution de sous-porteuses.
